Europäisches Patentamt

European Patent Office

Office européen des brevets

(19)

(11) Numéro de publication : **0 073 703**
**B1**

(12) FASCICULE DE BREVET EUROPÉEN

(45) Date de publication du fascicule du brevet :
15.05.85

(51) Int. Cl.⁴ : **B 01 J 37/02**, B 01 J 35/10,
B 01 J 21/04

(21) Numéro de dépôt : 82401494.8

(22) Date de dépôt : 06.08.82

(54) Composition d'alumine pour le revêtement d'un support de catalyseur son procédé de préparation et le support de catalyseur obtenu.

(30) Priorité : 27.08.81 FR 8116352

(43) Date de publication de la demande :
09.03.83 Bulletin 83/10

(45) Mention de la délivrance du brevet :
15.05.85 Bulletin 85/20

(84) Etats contractants désignés :
AT BE CH DE FR GB IT LI NL SE

(56) Documents cités :
CH-A- 588 299
DE-A- 2 422 851
FR-A- 2 253 561
GB-A- 1 569 525
US-A- 3 554 929
US-A- 3 975 510
US-A- 4 116 883

(73) Titulaire : RHONE-POULENC SPECIALITES CHIMI-
QUES
"Les Miroirs" 18, Avenue d'Alsace
F-92400 Courbevoie (FR)

(72) Inventeur : Dupin, Thierry
7, rue Robert de Luzarches
F-95140 Garges-lès-Gonesse (FR)

(74) Mandataire : Savina, Jacques et al
RHONE-POULENC RECHERCHES Service Brevets
Chimie et Polymères 25, quai Paul Doumer
F-92408 Courbevoie Cedex (FR)

## 0 073 703

**Description**

La présente invention concerne une composition d'alumine pour le revêtement d'un support de catalyseur, son procédé de fabrication et le support de catalyseur obtenu. Elle concerne en particulier une composition de revêtement d'un substrat métallique ou céramique permettant d'obtenir un support de catalyseur dont la couche superficielle présente à la fois de la microporosité et de la macroporosité.

Les catalyseurs formés d'un substrat revêtu d'une pellicule ou d'une couche d'oxydes réfractaires sur laquelle est déposée la phase catalytiquement active, sont utilisés dans de nombreuses réactions en phase gazeuse. Ainsi, la purification catalytique des gaz d'échappement des moteurs à combustion interne fonctionnant à l'essence et des moteurs diésel est-elle couramment réalisée à l'aide de catalyseurs comportant un substrat céramique ou métallique sous forme d'une structure inerte et rigide (monolithique) en nids d'abeille revêtu d'une pellicule ou couche d'alumine sur laquelle est déposée la phase active.

Si le revêtement des monolithes céramiques avec une pellicule d'oxyde réfractaire et en particulier d'alumine s'avère relativement aisé le revêtement des monolithes métalliques s'avère beaucoup plus difficile et nécessite par exemple d'utiliser des aciers contenant de l'aluminium que l'on oxyde en surface pour pouvoir accrocher efficacement ensuite la pellicule d'oxyde réfractaire ou la couche d'alumine.

Jusqu'à présent, il n'existait pas de composition pouvant être directement accrochée indifféremment à un substrat céramique ou métallique sans traitement préalable de ce dernier et réalisant une liaison excellente entre le substrat céramique ou métallique et la pellicule ou la couche d'oxyde réfractaire formant le revêtement.

On connaît, d'après le FR-A-2 253 561, un procédé de préparation d'un catalyseur, caractérisé en ce qu'il comprend la disposition sur un substrat d'une couche superficielle adhérente et continue d'une matière de support d'une matière catalytique, la matière de support comprenant au moins une partie en gel, puis la cuisson de l'ensemble, et la disposition sur la couche superficielle d'une dispersion sensiblement atomique de matière catalytique, de manière qu'elle se fixe à la couche superficielle sans agglomération de la plus grande partie des atomes de la matière catalytique incidente.

La matière du support est disposée sur le substrat par mise en contact de celui-ci avec une dispersion aqueuse contenant un gel d'alumine dispersé dans l'eau et une poudre d'alumine comprenant des particules dont le diamètre est compris entre 1 et 15 μm, le rapport de la poudre d'alumine au gel d'alumine dans la dispersion étant compris entre 6 : 1 et 10 : 1.

On connaît, d'après le brevet américain n° 3 554 929 des compositions d'alumine pour le revêtement des supports de catalyseurs. Les compositions d'alumine décrites dans ce brevet comportent de 5 à 10 % de boehmite colloïdale et de 90 à 95 % de particules d'alumine active ayant une surface spécifique comprise entre 50 et 600 $m^2$/g et une taille de particule comprise entre 8 et 60 microns. Selon l'exemple 1 de ce brevet, il est nécessaire, pour revêtir un corps en aluminium (alliage 5052 comportant 2,5 % de magnésium) avec la composition d'alumine décrite, de revêtir préalablement celui-ci avec une couche comportant principalement de la mullite, une proportion importante d'alumine cristalline et une faible proportion de matière amorphe.

Selon ce brevet américain, les compositions en alumine à grande surface spécifique qui y sont revendiquées ne permettent pas de revêtir directement des surfaces métalliques sans traitement préalable. De plus, les revêtements en alumine à grande surface spécifique obtenus selon ce brevet américain ne présentent pas des caractéristiques de porosités satisfaisantes, en effet les revêtements obtenus sont microporeux et ne présentent pas la macroporosité indispensable à une bonne efficacité catalytique.

La demanderesse a mis au point une composition d'alumine pour le revêtement des supports de catalyseur qui est directement applicable aux surfaces métalliques ou céramiques et qui permet d'obtenir des supports de catalyseur dont la couche superficielle présente à la fois de la microporosité et de la macroporosité ; les supports obtenus sont parfaitement adaptés pour la réalisation de catalyseurs pour les réactions très rapides à forte limitation diffusionnelle interne et pour les réactions avec empoisonnement progressif, comme par exemple le traitement des gaz d'échappement des moteurs à combustion interne.

La présente invention concerne en effet une composition aqueuse d'alumine pour le revêtement des supports de catalyseurs comportant un liant qui constitue essentiellement la partie dispersée et une charge qui constitue essentiellement la partie non dispersée de la composition caractérisée en ce que le taux de dispersion dans l'eau de la composition est compris entre 10 et 60 %, la granulométrie de la partie non dispersée de la composition est telle que le diamètre moyen des particules d'alumine qui la constitue est compris entre 1 et 15 microns (μm), au moins 70 % de ces particules ayant un diamètre compris entre la moitié du diamètre moyen et le double du diamètre moyen.

Au sens de l'invention, le taux de dispersion est représenté par la proportion d'alumine qui reste en suspension colloïdale totale après que la composition ait été soumise à une centrifugation. On mesure ce taux de dispersion de la façon suivante : la composition aqueuse d'alumine est diluée de façon à obtenir une concentration en alumine totale égale à 100 g/l ; 100 $cm^3$ de cette solution est soumise à une agitation violente pendant 10 minutes ; la solution est ensuite centrifugée pendant 10 minutes à la vitesse

2

0 073 703

de 3 000 tours par minute ; on sépare la partie décantée de la partie non décantée constituée par une suspension colloïdale d'alumine ; on calcine et on pèse la partie décantée, le taux de dispersion est exprimé comme étant le rapport entre la quantité totale initiale d'alumine de la composition moins la quantité d'alumine décantée sur la quantité totale initiale d'alumine de la composition.

Selon la présente invention, le taux de dispersion dans l'eau de la composition aqueuse d'alumine, est compris entre 10 et 60 % et de préférence entre 10 et 40 %, la granulométrie de la partie non dispersée de la composition est telle que le diamètre moyen des particules d'alumine qui la constitue est compris entre 1 et 15 microns, au moins 70 % de ces particules ayant un diamètre compris entre la moitié du diamètre moyen et le double du diamètre moyen.

La partie non dispersée de la composition est essentiellement constituée par la charge, une partie mineure de celle-ci peut provenir du liant.

La proportion en poids de la partie dispersée de la composition est comprise entre 10 et 60 % et de préférence entre 10 et 40 %. Il en résulte que la proportion en poids de la partie non dispersée de la composition est comprise entre 40 et 90 % et de préférence entre 60 et 90 %.

Selon la présente invention, le liant d'alumine est constitué essentiellement d'une partie d'alumine dispersée et éventuellement d'une partie mineure d'alumine non dispersée ; la partie dispersée représentant au moins 70 % en poids du liant.

Le liant d'alumine mis en œuvre doit être gélifiable ou coagulable par effet thermique ou chimique.

La gélification ou coagulation par effet thermique est bien connue de l'homme de l'art et peut être obtenue par évaporation de l'eau de la suspension ou de la dispersion aqueuse d'alumine formant le liant. La gélification ou coagulation par effet chimique est également bien connue de l'homme de l'art et peut être obtenue par augmentation du pH de la suspension ou de la dispersion aqueuse d'alumine formant le liant à une valeur supérieure à 9 qui correspond au point isoélectrique de l'alumine.

Les liants d'alumine que l'on peut mettre en œuvre selon l'invention sont notamment les suspensions ou dispersions aqueuses de boehmites fines ou ultra-fines qui sont composées de particules ayant des dimensions dans le domaine colloïdal c'est-à-dire inférieur à 2 000 Å environ.

Les dispersions ou suspensions aqueuses de boehmites fines ou ultra-fines peuvent être obtenues ainsi qu'il est bien connu de l'homme de l'art par peptisation dans l'eau ou l'eau acidulée de ces produits. Les boehmites fines ou ultra-fines mises en œuvre selon la présente invention peuvent notamment avoir été obtenues selon le procédé décrit dans les brevets français $n^{os}$ 1 261 182 et 1 381 282 ou dans la demande de brevet européen n° 15 196 au nom de la demanderesse.

Le brevet français n° 1 261 182 décrit notamment un procédé de fabrication de boehmite fine ou ultra-fine par chauffage d'une dispersion aqueuse d'alumine en présence d'un radical d'acide monovalent, la dispersion aqueuse d'alumine ayant été obtenue à partir de chlorure basique d'aluminium, de nitrate basique d'aluminium, d'hydroxyde d'aluminium, de gel d'alumine ou de solutions colloïdales d'alumine. Ce produit commercialisé par la Société Du Pont de Nemours sous la marque Baymal, représente une boehmite fine ou ultra-fine fibrillaire dont la surface spécifique est généralement comprise entre 250 et 350 $m^2/g$.

Le brevet français n° 1 381 282 décrit notamment un procédé de fabrication de boehmite fine ou ultra-fine consistant à faire évoluer à une température comprise entre 60 et 150 °C une suspension ou un gâteau de gel d'alumine hydratée amorphe contenant jusqu'à 35 % en poids d'alumine comptée en $Al_2O_3$, et par rapport à cette alumine comptée en molécules d'$Al_2O_3$, une quantité d'ions acides monovalents variant de 0,05 à 0,5, pendant un temps de 15 heures à 10 jours ; le gâteau ayant été obtenu par essorage, lavage et filtration de gel d'alumine précipité en continu à un pH compris entre 8 et 9 à partir d'une solution d'aluminate de soude et d'acide nitrique. La surface spécifique de ces produits varie généralement entre 200 et 600 $m^2/g$.

La demande de brevet européen n° 15 196 décrit notamment un procédé de fabrication de boehmite au moins partiellement sous forme de boehmite ultra-fine par traitement dans un milieu aqueux ayant un pH inférieur à 9 d'une poudre d'alumine active obtenue par déshydratation rapide d'hydrargillite dans un courant de gaz chauds.

On peut également mettre en œuvre comme liant d'alumine selon l'invention, les suspensions ou dispersions aqueuses obtenues à partir de pseudo-boehmite, de gels d'alumine amorphe, de gels d'hydroxyde d'aluminium ou d'hydrargillite ultra-fine.

La pseudo-boehmite peut notamment avoir été préparée selon le procédé décrit dans le brevet américain n° 3 630 670 par réaction d'une solution d'un aluminate alcalin avec une solution d'un acide minéral. Elle peut également avoir été préparée tel que décrit dans le brevet français n° 1 357 830 par précipitation à pH 9, à une température faiblement supérieure à l'ambiante à partir de réactifs de concentrations telles que l'on obtient environ 50 g/l d'alumine dans la dispersion.

Les gels d'alumine amorphe peuvent notamment avoir été préparés selon les procédés décrits dans l'article « Alcoa Paper n° 19 (1972) pages 9 à 12 » et notamment par réaction d'aluminate et d'acide, ou d'un sel d'aluminium et d'une base ou d'un aluminate et d'un sel d'aluminium ou par hydrolyse d'alcoolates d'aluminium ou par hydrolyse de sels basiques d'aluminium.

Les gels d'hydroxyde d'aluminium peuvent notamment être ceux qui ont été préparés selon les précédents décrits dans les brevets américains $n^{os}$ 3 268 295 et 3 245 919.

L'hydrargillite ultra-fine peut notamment avoir été préparée selon le procédé décrit dans le brevet

3

français n° 1 371 808, par évolution à une température comprise entre la température ambiante et 60 °C de gels d'alumine sous forme de gâteau et contenant par rapport à l'alumine comptée en molécules d'Al$_2$O$_3$, 0,10 ion acide monovalent.

Selon une variante du procédé de l'invention, le liant d'alumine peut être au moins partiellement remplacé par une suspension ou une dispersion de silice présentant les mêmes caractéristiques que le liant d'alumine.

Selon la présente invention, la charge d'alumine est constituée essentiellement d'une partie d'alumine non dispersable et éventuellement d'une partie mineure d'alumine dispersable qui est dispersée dans la composition ; la partie non dispersable représentant au moins 90 % en poids de la charge. Selon la présente invention, la granulométrie de la partie non dispersée de la composition, qui est donc essentiellement constituée par la charge, est telle que le diamètre moyen des particules d'alumine qui la constitue, est compris entre 1 et 15 microns, au moins 70 % de ces particules ayant un diamètre compris entre la moitié du diamètre moyen et le double du diamètre moyen.

La charge d'alumine mise en œuvre peut être tout composé d'alumine présentant les caractéristiques qui ont été exposées ci-dessus. On peut en particulier, utiliser des composés hydratés d'alumine tels que : l'hydrargillite, la bayerite, la boehmite, la pseudo-boehmite et les gels d'alumine amorphe ou essentiellement amorphe. On peut également mettre en œuvre les formes déshydratées ou partiellement déshydratées de ces composés qui sont constitués d'alumines de transition et qui comportent au moins une des phases prises dans le groupe constitué par rhô, chi, êta, gamma, kappa, thêta, delta, alpha.

En particulier, on pourra notamment utiliser des charges d'alumine obtenues selon l'un des procédés suivants, après éventuellement broyage et tamisage des particules.

— On précipite une solution aqueuse d'un sel d'aluminium par une solution d'un aluminate alcalin, on atomise le précipité obtenu puis on le remet en suspension dans une solution aqueuse ayant un pH compris entre 4,5 et 7, on atomise et on sèche la bouillie d'alumine obtenue puis on lave, sèche et calcine le produit. (Procédé décrit dans le brevet US 3 520 654).

— Par précipitation d'un gel d'alumine à un pH compris entre 7,5 et 11, lavage, essorage, remise en suspension, déshydratation rapide du produit dans un courant de gaz chauds à une température d'entrée comprise entre environ 350 et 1 000 °C puis calcination. (Procédé décrit dans le brevet FR 2 221 405).

— Par précipitation d'un gel d'alumine à un pH compris entre 7 et 10,5, mûrissement du précipité à un pH compris entre 10 et 11, homogénéisation et atomisation à 250-550 °C de la bouillie obtenue puis calcination. (Procédé décrit dans le brevet GB 888 772).

— Par précipitation d'un aluminate alcalin par un acide minéral à une température comprise entre 30 et 75 °C, mûrissement dans un second réacteur à 35-70 °C à un pH voisin de 7, recyclage de la bouillie obtenue dans le réacteur de mélange, filtration, lavage, séchage du produit par atomisation puis calcination. (Procédé décrit dans le brevet US 3 630 670).

— Par déshydratation rapide d'hydroxydes ou d'oxyhydroxydes d'aluminium, et, plus particulièrement, d'hydrargillite dans un courant de gaz chauds ; cette déshydratation étant opérée dans n'importe quel appareillage approprié à l'aide d'un courant de gaz chauds, la température d'entrée des gaz dans l'appareillage variant généralement de 400 à 1 200 °C environ, le temps de contact de l'hydroxyde ou de l'oxyhydroxyde avec les gaz chauds étant généralement compris entre une fraction de seconde et 4-5 secondes ; un tel procédé de préparation de poudre d'alumine active a notamment été décrit dans le brevet français n° 1 108 011.

— Par traitement dans un milieu aqueux ayant un pH inférieur à 9 d'une poudre d'alumine active obtenue par déshydratation rapide d'hydrargillite dans un courant de gaz chauds, séchage par atomisation, puis, calcination. (Procédé décrit dans la demande de brevet européen n° 15 196).

Les charges d'alumine obtenues selon les divers procédés, peuvent se classer en deux groupes. Le premier groupe concerne les charges obtenues après séchage et éventuellement calcination qui présentent le taux de dispersion requis. Ces produits sont utilisables tels quels en tant que charges après éventuellement broyage et tamisage. Le deuxième groupe concerne les charges obtenues après séchage qui ne présentent pas le taux de dispersion requis. Ces charges nécessitent pour être mises en œuvre, une étape de calcination à une température supérieure à 300 °C, elles sont alors utilisables selon l'invention, après éventuellement broyage et tamisage.

Selon une variante du procédé de l'invention, la charge d'alumine peut être au moins partiellement remplacée par un oxyde choisi parmi ce groupe constitué par les oxydes de magnésium, calcium, strontium, baryum, scandium, yttrium, les lanthanides, gallium, indium, thallium, silicium, titane, zirconium, hafnium, thorium, germanium, étain, plomb, vanadium, niobium, tantale, chrome, molybdène, tungstène, rhénium, fer, cobalt, nickel, cuivre, zinc, bismuth.

La présente invention concerne également le procédé de fabrication de la composition qui vient d'être décrite, pour le revêtement des supports de catalyseurs.

Selon un premier mode de mise en œuvre du procédé de fabrication de la composition selon l'invention, on peut opérer le mélange de la charge et du liant sous forme de poudres. Le liant sous forme de poudre étant constitué par les divers produits : boehmites, pseudo-boehmite, gels d'alumine amorphe, gels d'hydroxyde d'aluminium, hydrargillite ultra-fine à l'état non peptisé. On met ensuite en contact, le mélange poudreux avec de l'eau ou de l'eau acidulée. Le mélange charge-liant-eau est réalisé de telle façon que le pH de la composition finale est inférieur à 4 et dans des proportions telles que le taux de dispersion de la composition finale, est compris entre 10 et 60 %.

Selon un second mode de mise en œuvre du procédé de fabrication de la composition selon l'invention, on mélange sous agitation la charge sous forme de poudre et le liant sous forme de suspension ou de dispersion d'alumine dans des proportions telles que le taux de dispersion de la composition soit compris entre 10 et 60 % et que le pH de la composition finale soit inférieur à 4.

Quel que soit le mode de mise en œuvre du procédé de fabrication de la composition de l'invention, celle-ci doit présenter, pour pouvoir être appliquée au revêtement d'un support de catalyseur, une viscosité comprise entre 10 et 100 centipoises. De telles valeurs de viscosité peuvent notamment être obtenues en adoptant la concentration totale en alumine de la composition dans des limites comprises entre 10 et 40 % en poids ou en ajoutant à la composition des épaississants organiques tels que les polymères hydrosolubles comme la carboxyméthylcellulose et la carboxyéthylcellulose, les polyacrylates, les gommes xanthane, les biopolymères commercialisés par la société Rhône-Poulenc sous la marque XOB 23, l'alcool polyvinylique, etc... ; ces épaississants organiques devant être compatibles avec notamment le milieu de la composition et le temps de stockage de celle-ci avant sa mise en œuvre pour le revêtement d'un support de catalyseur.

La présente invention concerne également des revêtements obtenus avec les compositions de l'invention et qui présentent à la fois de la microporosité et de la macroporosité.

Les compositions selon la présente invention s'appliquent directement au revêtement des supports de catalyseurs comportant indifféremment un substrat céramique ou métallique. Ceci constitue un des avantages importants procuré par les compositions de l'invention. Lorsque l'on applique les compositions de l'invention au revêtement des substrats métalliques, il est préférable que ceux-ci soient propres ; dans ce but, il peut être avantageux de les dégraisser préalablement au revêtement ou de leur faire subir un décapage en milieu acide (par exemple chlorosulfurique).

Le revêtement du substrat avec la composition de l'invention peut être réalisé de la façon suivante :
— on immerge le substrat céramique ou métallique dans la composition de l'invention, de façon à remplir tous les canaux de celui-ci, on peut également opérer par écoulement de la composition à travers les canaux du substrat,
— on opère un égouttage partiel puis un drainage des canaux du substrat, au moyen par exemple d'un courant d'air comprimé,
— on coagule la composition par effet thermique ou chimique,
— on sèche si nécessaire à une température inférieure à 300 °C puis on calcine le substrat revêtu de la composition à une température comprise entre 300 °C et 1 100 °C, la température de calcination étant adaptée en fonction de la surface spécifique que l'on désire obtenir pour le revêtement.

L'épaisseur du revêtement obtenu avec les compositions de l'invention présentant des caractéristiques de viscosité qui ont été mentionnées ci-dessus, est comprise entre environ 2 microns et 100 microns. Pour une composition donnée, il existe une relation quasi linéaire entre l'épaisseur du revêtement obtenu et la viscosité de la composition employée.

Afin d'augmenter l'épaisseur de la couche obtenue dans une opération de revêtement, on peut après calcination opérer un second revêtement, puis, un troisième...

Les supports de catalyseurs obtenus par revêtement d'un substrat métallique ou céramique avec la composition de l'invention et dont la couche superficielle présente à la fois de la microporosité et de la macroporosité, sont caractérisés en ce que la répartition de pore du revêtement est telle que 0,05 à 0,50 cm$^3$/g du volume poreux est constitué par des pores ayant un diamètre compris entre 0,1 et 0,5 micron, 0 à 0,40 cm$^3$/g du volume poreux est constitué par des pores ayant un diamètre compris entre 0,5 et 1 micron et 0 à 0,40 cm$^3$/g du volume poreux est constitué par des pores ayant un diamètre compris entre 1 et 20 microns, 0,3 à 0,9 cm$^3$/g du volume poreux est constitué par des pores ayant un diamètre inférieur à 0,1 micron.

La surface spécifique du revêtement est comprise entre 20 et 350 m$^2$/g.

Le volume poreux total du revêtement est compris entre 0,35 cm$^3$/g et 2,2 cm$^3$/g et de préférence compris entre 0,5 et 1,5 cm$^3$/g.

Les supports de catalyses obtenus lorsque les conditions d'utilisation le nécessitent, peuvent avoir été traités de façon à stabiliser thermiquement leur couche superficielle d'alumine. Ainsi qu'il est bien connu de l'homme de l'art, ce traitement peut avoir été effectué par la silice, les métaux alcalinoterreux ou les terres rares.

Les supports obtenus sont parfaitement adaptés pour la réalisation de catalyseurs pour les réactions très rapides à forte limitation diffusionnelle interne et pour les réactions avec empoisonnement progressif, comme par exemple le traitement des gaz d'échappement des moteurs à combustion interne ; dans tous les hydrotraitements des produits pétroliers, comme l'hydrodésulfuration, l'hydrodémétalla-tion, l'hydrodénitrification. Ils peuvent également être utilisés dans les réactions de récupération du soufre à partir de composés soufrés (catalyse Claus), la déshydratation, le reformage, le reformage à la vapeur, la déshydrohalogénation, l'hydrocraquage, l'hydrogénation, la déshydrogénation, la déshydrocyclisation d'hydrocarbures ou autres composés organiques, les réactions d'oxydation et de réduction.

Les exemples ci-après illustrent l'invention sans en limiter la portée.

## Exemple 1

— Préparation d'une composition selon l'invention :

On prépare un liant d'alumine (I) de la façon suivante : 5 000 grammes d'alumine obtenus par déshydratations d'hydrargillite dans un courant de gaz chaud à 800 °C, pendant 0,5 seconde, sont introduits dans un autoclave contenant une solution d'acide nitrique à pH = 1. On chauffe la suspension en l'agitant pendant 4 heures à 180 °C. La suspension obtenue, qui constitue le liant d'alumine (I), est séchée par atomisation, à 150 °C afin de le mettre sous forme de poudre ; cette poudre présente aux rayons X une structure de boehmite fibrillaire.

Une partie de cette poudre est calcinée sous air à 600 °C pendant 2 heures pour obtenir la charge d'alumine (II).

Le liant et la charge présentent les taux de dispersion suivants :

|  | Taux de dispersion |
| --- | --- |
| Liant d'alumine (I) | 75 % |
| Charge d'alumine (II) | 5 % |

On disperse 150 g du liant d'alumine (I) sous forme de poudre dans 1 000 cm³ d'eau distillée, on agite pendant 10 minutes, puis, on rajoute 300 g de la charge d'alumine (II), on agite encore pendant 10 minutes.

Le taux de dispersion de la composition obtenue est de 25 % et sa viscosité de 70 centipoises, la granulométrie de la partie non dispersée est telle que le diamètre moyen des particules qui la composent est de 7,2 microns, 81 % des particules ayant un diamètre compris entre la moitié de ce diamètre moyen et le double de ce diamètre moyen.

— Support de catalyseur obtenu par revêtement avec la composition d'un monolithe céramique.

On utilise un monolithe en cordiérite ayant un nombre d'ouvertures de 400 par pouce carré.

Le monolithe est immergé entièrement jusqu'à remplissage complet des canaux, puis égoutté, et drainé par un courant d'air de 300 l/heure. Après séchage à 110 °C, le monolithe est calciné à 600 °C.

Les caractéristiques du revêtement obtenu sont les suivantes :

épaisseur = 43 microns
surface spécifique = 192 m²g⁻¹

| Volume poreux total g/cm³ | Volume poreux en g/cm³ constitué par des pores de diamètre $\varnothing$ en µm tels que | | | |
| --- | --- | --- | --- | --- |
| | $\varnothing < 0,1$ | $0,1 < \varnothing < 0,5$ | $0,5 < \varnothing < 1$ | $1 < \varnothing < 20$ |
| 1,15 | 0,71 | 0,11 | 0,05 | 0,28 |

## Exemple 2

— Préparation d'une composition selon l'invention :

On utilise comme liant, le liant d'alumine (I) de l'Exemple 1 et comme charge, la charge d'alumine (II) de l'Exemple 1.

On mélange 120 g du liant d'alumine (I) sous forme de poudre avec 330 g de la charge d'alumine (II).

Ce mélange est introduit sous agitation dans 1 200 g d'eau distillée, et le pH est ajusté à 3,5 par l'acide nitrique.

Le taux de dispersion de la composition obtenue est de 19 % et sa viscosité de 55 centipoises, la granulométrie de la partie non dispersée est telle que le diamètre moyen des particules qui la composent est de 7,5 microns, 78 % des particules ayant un diamètre compris entre la moitié de ce diamètre moyen et le double de ce diamètre moyen.

— Support de catalyseur obtenu par revêtement avec la composition d'un monolithe métallique.

On utilise un monolithe métallique en acier inoxydable ordinaire, ayant 600 ouvertures par pouce carré, et on lui fait subir le même traitement que dans l'exemple 1 avec la composition définie ci-dessus. Les caractéristiques du revêtement obtenu sont les suivantes :

épaisseur = 35 microns
surface spécifique = 185 $m^2g^{-1}$

| Volume poreux total g/cm³ | Volume poreux en g/cm³ constitué par des pores de diamètre $\varnothing$ en μm tels que | | | |
| --- | --- | --- | --- | --- |
| | $\varnothing < 0,1$ | $0,1 < \varnothing < 0,5$ | $0,5 < \varnothing < 1$ | $1 < \varnothing < 20$ |
| 1,25 | 0,72 | 0,15 | 0,07 | 0,31 |

## Exemple 3

— Préparation d'une composition selon l'invention :

On prépare un liant d'alumine (III) de la façon suivante : On précipite une solution d'aluminate de soude par l'acide nitrique de façon continue à pH 8,7 ; après mûrissement de 8 heures le précipité est essoré, lavé, et remis en suspension dans un autoclave où il est conservé sous agitation à 110 °C pendant 24 heures. La suspension obtenue qui constitue le liant d'alumine (III) est alors séchée par atomisation à 110 °C, afin de le mettre sous forme de poudre. La poudre présente aux rayons X une structure de boehmite ultra-fine fibrillaire, son taux de dispersion dans l'eau est de 90 %.

On disperse 40 g du liant d'alumine (III) sous forme de poudre dans 1 200 cm³ d'eau distillée à pH 2,5 par l'acide nitrique, on rajoute sous agitation 310 g de la charge d'alumine (II) et 16 g de nitrate de lanthane, dans le but de stabiliser thermiquement le revêtement. La composition obtenue a les caractéristiques suivantes :

taux de dispersion : 12 %
viscosité : 110 centipoises
la granulométrie de la partie non dispersée est telle que le diamètre moyen des particules qui la composent est de 8,1 microns, 75 % des particules ayant un diamètre compris entre la moitié du diamètre moyen et le double du diamètre moyen.

— Support de catalyseur obtenu par revêtement avec la composition d'un monolithe céramique.

On utilise un monolithe en cordiérite et on applique la même procédure que dans l'Exemple 1 avec la composition définie ci-dessus. Les caractéristiques du revêtement obtenu sont les suivantes :

épaisseur = 63 microns
surface spécifique = 210 $m^2g^{-1}$

| Volume poreux total g/cm³ | Volume poreux en g/cm³ constitué par des pores de diamètre $\varnothing$ en μm tels que | | | |
| --- | --- | --- | --- | --- |
| | $\varnothing < 0,1$ | $0,1 < \varnothing < 0,5$ | $0,5 < \varnothing < 1$ | $1 < \varnothing < 20$ |
| 1,33 | 0,81 | 0,16 | 0,06 | 0,30 |

## Exemple 4

— Préparation d'une composition selon l'invention :

La charge d'alumine (II) est rebroyée pour obtenir un diamètre moyen de particule inférieur à 3 microns, puis sélectée pour enlever les particules trop fines ou trop grosses. Sa répartition granulométrique est alors la suivante :

Le diamètre moyen des particules est de 2,6 microns et 83 % de ces particules ont un diamètre compris entre la moitié du diamètre moyen et le double du diamètre moyen.

210 g de la charge d'alumine (II) broyée et 45 g du liant d'alumine (III) sous forme de poudre, sont dispersés dans 1 200 cm³ d'eau, le pH final est ajusté à 3,7 par ajout d'acide nitrique.

La composition obtenue a les caractéristiques suivantes :

taux de dispersion : 16 %
viscosité : 40 centipoises

la granulométrie de la partie non dispersée est telle que le diamètre moyen des particules qui la composent est de 2,5 microns, 84 % de ces particules ayant un diamètre compris entre la moitié du diamètre moyen et le double du diamètre moyen.

— Support de catalyseur obtenu par revêtement avec la composition d'un monolithe métallique.

On utilise cette composition pour recouvrir un monolithe métallique en acier inoxydable ordinaire, en utilisant la procédure décrite dans l'Exemple 1, avec la composition définie ci-dessus.

Le revêtement obtenu a les caractéristiques suivantes :

épaisseur = 13 microns
surface spécifique = 201 m²g⁻¹

| Volume poreux total g/cm³ | Volume poreux en g/cm³ constitué par des pores de diamètre ∅ en μm tels que | | | |
|---|---|---|---|---|
| | $\varnothing < 0,1$ | $0,1 < \varnothing < 0,5$ | $0,5 < \varnothing < 1$ | $1 < \varnothing < 20$ |
| 1,27 | 0,76 | 0,13 | 0,06 | 0,32 |

Exemple 5

— Préparation d'une composition selon l'invention :

On prépare une charge d'alumine (IV) de la façon suivante : 5 kg d'alumine obtenus par déshydratation d'hydrargillite dans un courant de gaz chaud à 800 °C pendant 0,5 seconde, sont broyés pendant 1 heure dans un broyeur à boulets, puis, sélectés dans un broyeur à aubes, et enfin, calcinés à 500 °C pendant 1 heure.

Les caractéristiques de la charge d'alumine (IV) obtenue sont les suivantes :

taux de dispersion : 5 %
surface spécifique : 295 m²g⁻¹
répartition granulométrique : le diamètre moyen des particules est de 12 microns et 71 % de ces particules ont un diamètre compris entre la moitié du diamètre moyen et le double du diamètre moyen.

285 g de la charge d'alumine (IV) et du liant d'alumine (I) sous forme de poudre, sont dispersés dans 1 200 cm³ d'eau.

La composition obtenue a les caractéristiques suivantes :

taux de dispersion : 35 %
viscosité : 95 centipoises
la répartition granulométrique de la partie non dispersable est telle que le diamètre moyen des particules qui la composent est de 13,2 microns, 78 % de ces particules ayant un diamètre compris entre la moitié de ce diamètre moyen et le double de ce diamètre moyen.

— Support de catalyseur obtenu par revêtement avec la composition d'un monolithe céramique.

On utilise cette composition pour recouvrir un monolithe en cordiérite de 300 ouvertures par pouce carré par la procédure décrite dans l'Exemple 1 ; en utilisant la composition ci-dessus.

Les caractéristiques du revêtement obtenu sont les suivantes :

épaisseur = 70 microns
surface spécifique = 245 m²g⁻¹

8

| | Volume poreux en g/cm³ constitué par des pores de diamètre ∅ en μm tels que | | | |
|---|---|---|---|---|
| Volume poreux total g/cm³ | $\varnothing < 0,1$ | $0,1 < \varnothing < 0,5$ | $0,5 < \varnothing < 1$ | $1 < \varnothing < 20$ |
| 0,97 | 0,52 | 0,12 | 0,08 | 0,25 |

Il apparaît ainsi que les compositions d'alumine selon l'invention sont directement applicables pour le revêtement de monolithes métalliques ou céramiques et permettent d'obtenir une couche superficielle présentant à la fois de la macroporosité et de la microporosité.

## Revendications

1. Composition aqueuse d'alumine pour le revêtement des supports de catalyseurs comportant un liant d'alumine qui constitue essentiellement la partie dispersée et une charge d'alumine qui constitue essentiellement la partie non dispersée de la composition, dans laquelle le taux de dispersion dans l'eau de la composition est compris entre 10 et 60 %, la granulométrie de la partie non dispersée de la composition est telle que le diamètre moyen des particules d'alumine qui la constituent est compris entre 1 et 15 μm, au moins 70 % de ces particules ayant un diamètre compris entre la moitié du diamètre moyen et le double du diamètre moyen.

2. Composition selon la revendication 1, caractérisée en ce que son taux de dispersion est compris entre 10 et 40 %.

3. Composition selon l'une quelconque des revendications précédentes, caractérisée en ce que le liant d'alumine est constitué essentiellement d'une partie d'alumine dispersée et éventuellement d'une partie mineure d'alumine non dispersée, la partie d'alumine dispersée représentant au moins 70 % en poids du liant d'alumine.

4. Composition selon l'une quelconque des revendications précédentes, caractérisée en ce que le liant d'alumine est gélifiable ou coagulable par effet thermique ou chimique, la gélification ou coagulation par effet thermique du liant est obtenue par évaporation de l'eau de la suspension ou de la dispersion aqueuse formant le liant d'alumine, la gélification ou coagulation par effet chimique est obtenue par augmentation du pH de la suspension ou de la dispersion formant le liant d'alumine, à une valeur supérieure à 9.

5. Composition selon l'une quelconque des revendications précédentes, caractérisée en ce que le liant d'alumine est choisi parmi le groupe comportant les suspensions ou dispersions aqueuses de boehmites fines ou ultra-fines dont la dimension de particules est dans le domaine colloïdal, c'est-à-dire inférieur à 2 000 Å (200 nm), de pseudo-boehmites, de gels d'alumine amorphe, de gels d'hydroxyde d'aluminium ou d'hydrargillite ultra-fine.

6. Composition selon la revendication 1 caractérisée en ce que le liant d'alumine est remplacé partiellement par un sol de silice.

7. Composition selon la revendication 1, caractérisée en ce que la charge d'alumine est constituée essentiellement d'une partie d'alumine non dispersée et éventuellement d'une partie mineure d'alumine dispersée, la partie d'alumine non dispersée représentant au moins 90 % en poids de la charge d'alumine.

8. Composition selon la revendication 7, caractérisée en ce que la charge d'alumine est choisie parmi le groupe comportant les composés hydratés d'alumine et les formes déshydratées ou partiellement déshydratées de ces composés.

9. Composition selon la revendication 8, caractérisée en ce que la charge d'alumine est choisie parmi le groupe comportant l'hydrargillite, la bayerite, la boehmite, la pseudo-boehmite, les gels d'alumine amorphe ou essentiellement amorphe, les composés constitués d'alumine de transition qui comportent au moins une des phases prises dans le groupe constitué par rhô, chi, êta, gamma, kappa, thêta, delta, alpha.

10. Composition selon les revendications 7, 8, 9, caractérisée en ce que la charge d'alumine est partiellement remplacée par un oxyde choisi parmi le groupe constitué par les oxydes de magnésium, calcium, strontium, baryum, scandium, yttrium, les lanthanides, gallium, indium, thallium, silicium, titane, zirconium, hafnium, thorium, germanium, étain, plomb, vanadium, niobium, tantale, chrome, molybdène, tungstène, rhénium, fer, cobalt, nickel, cuivre, zinc, bismuth.

11. Procédé de fabrication de la composition selon la revendication 1, caractérisé en ce que l'on opère le mélange de la charge d'alumine et du liant d'alumine sous forme de poudres, on met ensuite en contact le mélange de poudres avec de l'eau ou de l'eau acidulée, le mélange charge-liant-eau étant réalisé de telle façon que le pH de la composition finale est inférieur à 4 et dans des proportions telles que le taux de dispersion de la composition finale soit compris entre 10 et 60 % ; on ajuste la viscosité de la composition à une valeur comprise entre 10 et 100 centipoises en réglant la concentration totale en alumine de la composition entre 10 et 40 % en poids ou en ajoutant à la composition des épaississants organiques.

12. Procédé de fabrication de la composition selon la revendication 1, caractérisé en ce que l'on mélange sous agitation la charge d'alumine sous forme de poudre et le liant d'alumine sous forme de suspension ou de dispersion, dans des proportions telles que le taux de dispersion de la composition obtenue soit compris entre 10 et 60 % et que son pH soit inférieur à 4 ; on ajuste la viscosité de la composition à une valeur comprise entre 10 et 100 centipoises en réglant la concentration totale en alumine de la composition entre 10 et 40 % en poids ou en ajoutant à la composition des épaississants organiques.

13. Procédé de revêtement d'un support de catalyseur comportant un substrat céramique ou métallique avec une composition selon la revendication 1, caractérisé en ce que l'on immerge le substrat céramique ou métallique dans la composition, de façon à remplir tous les canaux de celui-ci, on peut également opérer par écoulement de la composition à travers les canaux du substrat : l'on opère un égouttage partiel puis un drainage des canaux du substrat, au moyen par exemple d'un courant d'air comprimé ; l'on coagule la composition par effet thermique ou chimique ; l'on sèche si nécessaire à une température inférieure à 300 °C puis on calcine le substrat revêtu de la composition à une température comprise entre 300 °C et 1 100 °C.

14. Support de catalyseur obtenu par revêtement d'un substrat métallique ou céramique avec la composition de l'invention, caractérisé en ce que le revêtement présente à la fois de la microporosité et de la macroporosité et en ce que la répartition de pore du revêtement est telle que 0,05 à 0,50 cm$^3$/g du volume poreux est constitué par des pores ayant un diamètre compris entre 0,1 et 0,5 μm, 0 à 0,40 cm$^3$/g du volume poreux est constitué par des pores ayant un diamètre compris entre 0,5 et 1 μm et 0 à 0,40 cm$^3$/g du volume poreux est constitué par des pores ayant un diamètre compris entre 1 et 20 μm, 0,3 à 0,9 cm$^3$/g du volume poreux est constitué par des pores ayant un diamètre inférieur à 0,1 μm ; la surface spécifique du revêtement est comprise entre 20 et 350 m$^2$/g ; le volume poreux total du revêtement est compris entre 0,35 cm$^3$/g et 2,2 cm$^3$/g et de préférence compris entre 0,5 et 1,5 cm$^3$/g.

15. Application des supports de catalyseur selon la revendication 14, pour la fabrication de catalyseurs utilisables dans les réactions très rapides à forte limitation diffusionnelle interne et aux réactions avec empoisonnement progressif comme le traitement des gaz d'échappement des moteurs à combustion interne, les hydro-traitements des produits pétroliers : l'hydrodésulfuration, l'hydrodémétallation.

16. Application des supports de catalyseur selon la revendication 15 au traitement des gaz d'échappement des moteurs à combustion interne, l'hydrodésulfuration, l'hydrodémétallation, l'hydrodénitrification, la récupération du soufre à partir de composés soufrés, la déshydratation, le reformage, le reformage à la vapeur, la déshydrohalogénation, l'hydrocraquage, l'hydrogénation, la déshydrogénation, la déshydrocyclisation d'hydrocarbures ou autres composée organiques, les réactions d'oxydation et de réduction.

**Claims**

1. Aqueous alumina composition for coating catalyst supports, comprising an alumina binder which substantially forms the dispersed part and an alumina charge which substantially forms the undispersed part of the composition, in which the proportion of dispersion of the composition in water is between 10 and 60 %, the particle size distribution of the undispersed part of the composition is such that the mean diameter of the alumina particles which form it is between 1 and 15 μm, at least 70 % of these particles having a diameter of between one half of the mean diameter and twice the mean diameter.

2. Composition according to claim 1, characterised in that its proportion of dispersion is between 10 and 40 %.

3. Composition according to either of the preceding claims, characterised in that the alumina binder substantially consists of a dispersed alumina part and, if appropriate, of a minor part of undispersed alumina, the dispersed alumina part representing at least 70 % by weight of the alumina binder.

4. Composition according to any one of the preceding claims, characterised in that the alumina binder can be gelled or coagulated by thermal or chemical action, the gelling or coagulation of the binder by thermal action is obtained by evaporation of the water from the aqueous suspension or dispersion forming the alumina binder, and the gelling or coagulation by chemical action is obtained by raising the pH of the suspension or dispersion forming the alumina binder to a value higher than 9.

5. Composition according to any one of the preceding claims, characterised in that the alumina binder is chosen from the group comprising aqueous suspensions or dispersions of fine or ultra-fine boehmites, the particle size of which is in the colloidal range, that is to say below 2,000 Å (200 nm), of pseudo-boehmites, of amorphous alumina gels, or of gels of aluminium hydroxide or of ultra-fine hydrargillite.

6. Composition according to claim 1, characterised in that the alumina binder is partially replaced by a silica sol.

7. Composition according to claim 1, characterised in that the alumina charge substantially consists of an undispersed alumina part and, if appropriate, of a minor part of dispersed alumina, the undispersed alumina part representing at least 90 % by weight of the alumina charge.

8. Composition according to claim 7, characterised in that the alumina charge is chosen from the group comprising the hydrated compounds of alumina and the dehydrated or partially dehydrated forms of these compounds.

9. Composition according to claim 8, characterised in that the alumina charge is chosen from the group comprising hydrargillite, bayerite, boehmite, pseudo-boehmite, amorphous or substantially amorphous alumina gels, and compounds consisting of transition alumina which include at least one of the phases taken from the group consisting of rho, chi, eta, gamma, kappa, theta, delta and alpha.

10. Composition according to claims 7, 8, 9, characterised in that the alumina charge is partially replaced by an oxide chosen from the group consisting of the oxides of magnesium, calcium, strontium, barium, scandium, yttrium, the lanthanides, gallium, indium, thallium, silicon, titanium, zirconium, hafnium, thorium, germanium, tin, lead, vanadium, niobium, tantalum, chromium, molybdenum, tungsten, rhenium, iron, cobalt, nickel, copper, zinc and bismuth.

11. Process for manufacturing the composition according to claim 1, characterised in that the mixture of the alumina charge and of the alumina binder is processed in the form of powders, the mixture of powders is subsequently placed in contact with water or with acidified water, the charge-binder-water mixture being produced in such a manner that the pH of the final composition is lower than 4 and in such proportions that the degree of dispersion of the final composition is between 10 and 60 % ; the viscosity of the composition is adjusted to a value of between 10 and 100 centipoises by maintaining the total concentration of alumina in the composition between 10 and 40 % by weight or by adding organic thickeners to the composition.

12. Process for manufacturing the composition according to claim 1, characterised in that the alumina charge in powder form and the alumina binder in suspension or dispersion form are mixed by stirring in such proportions that the degree of dispersion of the composition obtained shall be between 10 and 60 %, and that its pH shall be lower than 4 ; the viscosity of the composition is adjusted to a value between 10 and 100 centipoises by maintaining the total concentration of alumina in the composition between 10 and 40 % by weight or by adding organic thickeners to the composition.

13. Process for coating a catalyst support comprising a ceramic or metal substrate with a composition according to claim 1, characterised in that the ceramic or metal substrate is immersed in the composition, so as to fill all the channels of the latter, it is also possible to proceed by a flow of the composition through the channels in the substrate ; a partial draining is carried out and then drainage of the channels in the substrate, by means, for example, of a stream of compressed air ; the composition is coagulated by thermal or chemical action ; the substrate coated with the composition is dried, if necessary, at a temperature below 300 °C and is then calcined at a temperature between 300 °C and 1,100 °C.

14. Catalyst support obtained by coating a metal or ceramic substrate with the composition of the invention, characterised in that the coating has microporosity and macroporosity at the same time and the pore distribution of the coating is such that 0.05 to 0.50 $cm^3/g$ of the pore volume consists of pores having a diameter between 0.1 and 0.5 $\mu m$, 0 to 0.40 $cm^3/g$ of the pore volume consists of pores having a diameter between 0.5 and 1 $\mu m$ and 0 to 0.40 $cm^3/g$ of the pore volume consists of pores having a diameter between 1 and 20 $\mu m$, 0.3 to 0.9 $cm^3/g$ of the pore volume consists of pores having a diameter below 0.1 $\mu m$ ; the specific surface of the coating is between 20 and 350 $m^2/g$ ; the total pore volume of the coating is between 0.35 $cm^3/g$ and 2.2 $cm^3/g$ and preferably between 0.5 and 1.5 $cm^3/g$.

15. Application of the catalyst supports according to claim 14, for the manufacture of catalysts which can be employed in very fast reactions with high internal diffusion limitation and for reactions with progressive poisoning such as the treatment of exhaust gases of internal combustion engines, and the hydro-processing of petroleum products : hydrodesulphurization and hydrodemetallization.

16. Application of the catalyst supports according to claim 15 to the treatment of the exhaust gases of internal combustion engines, hydrodesulphurization, hydrodemetallization, hydrodenitrification, the recovery of sulphur from sulphur compounds, dehydration, reforming, steam-reforming, dehydrohalogenation, hydrocracking, hydrogenation, dehydrogenation, dehydrocyclization of hydrocarbons or other organic compounds, and oxidation and reduction reactions.

**Patentansprüche**

1. Wässrige Aluminiumoxid-Zusammensetzung zur Beschichtung von Katalysatorträgern, die ein Aluminiumoxid-Bindemittel enthält, das im wesentlichen den dispergierten Teil bildet, und eine Aluminiumoxid-Charge, die im wesentlichen den nicht dispergierten Teil der Zusammensetzung bildet, deren Dispersionsgrad in Wasser zwischen 10 und 60 % liegt, wobei die Korngröße des nicht dispergierten Teils der Zusammensetzung so liegt, daß der mittlere Durchmesser der diese bildenden Aluminiumoxidpartikel zwischen 1 und 15 $\mu m$ liegt, wobei mindestens 70 % dieser Partikel einen Durchmesser zwischen der Hälfte und dem Doppelten des mittleren Durchmessers besitzen.

2. Zusammensetzung nach Anspruch 1, dadurch gekennzeichnet, daß ihr Dispersionsgrad zwischen 10 und 40 % liegt.

**0 073 703**

3. Zusammensetzung nach einem der vorangehenden Ansprüche, dadurch gekennzeichnet, daß das Aluminiumoxid-Bindemittel im wesentlichen aus einem Anteil an dispergiertem Aluminiumoxid und gegebenenfalls einem geringeren Anteil an nicht dispergiertem Aluminiumoxid besteht, wobei der Anteil an dispergiertem Aluminiumoxid mindestens 70 Gew.% des Aluminiumoxid-Bindemittels ausmacht.

4. Zusammensetzung nach einem der vorangehenden Ansprüche, dadurch gekennzeichnet, daß das Aluminiumoxid-Bindemittel durch thermische oder chemische Einwirkung gelierbar oder koagulierbar ist, die Gelierung oder Koagulierung des Bindemittels durch thermische Einwirkung durch Verdampfung von Wasser der Suspension oder der wässrigen Dispersion, die das Aluminiumoxid-Bindemittel bildet, und die Gelierung oder Koagulierung durch chemische Einwirkung durch Erhöhung des pH-Wertes der Suspension oder der Dispersion, die das Aluminiumoxid-Bindemittel bildet, auf einen Wert über 9 erhalten wird.

5. Zusammensetzung nach einem der vorangehenden Ansprüche, dadurch gekennzeichnet, daß das Aluminiumoxid-Bindemittel ausgewählt wird aus der Gruppe, die die wässrigen Suspensionen oder wässrigen Dispersionen von feinen oder ultrafeinen Boehmiten umfaßt, deren Partikelgröße im kolloidalen Bereich liegt, d. h. unter 2 000 Å (200 nm), von Pseudo-Boehmiten, Gelen von amorphem Aluminiumoxid, Gelen von Aluminiumhydroxid oder von ultra-feinem Hydrargillit.

6. Zusammensetzung nach Anspruch 1, dadurch gekennzeichnet, daß das Aluminiumoxid-Bindemittel teilweise durch ein Siliciumdioxidsol ersetzt wird.

7. Zusammensetzung nach Anspruch 1, dadurch gekennzeichnet, daß die Aluminiumoxid-Charge im wesentlichen aus einem Teil von nicht dispergiertem Aluminiumoxid und gegebenenfalls aus einem geringeren Teil von dispergiertem Aluminium-oxid besteht, wobei der Teil an nicht dispergiertem Aluminiumoxid wenigstens 90 Gew.% der Aluminiumoxid-Charge ausmacht.

8. Zusammensetzung nach Anspruch 7, dadurch gekennzeichnet, daß die Aluminiumoxid-Charge ausgewählt wird aus der Gruppe, die die hydratisierten Verbindungen von Aluminiumoxid und die dehydratisierten oder teilweise dehydratisierten Formen dieser Verbindungen umfasst.

9. Zusammensetzung nach Anspruch 8, dadurch gekennzeichnet, daß die Aluminiumoxid-Charge ausgewählt wird aus der Gruppe, die Hydrargillit, Bayerit, Boehmit, Pseudo-Boehmit, die Gele von amorphem oder im wesentlichen amorphem Aluminiumoxid und die Verbindungen umfaßt, die aus Übergangsaluminiumoxid bestehen, die wenigstens eine der Phasen aus der Gruppe von rho, chi, eta, gamma, kappa, theta, delta und alpha enthalten.

10. Zusammensetzung nach den Ansprüchen 7, 8, 9, dadurch gekennzeichnet, daß die Aluminiumoxid-Charge teilweise durch ein Oxid ersetzt wird, das aus der Gruppe ausgewählt wird, die von den Oxiden von Magnesium, Calcium, Strontium, Barium, Scandium, Yttrium, den Lanthaniden, Gallium, Indium, Thallium, Silicium, Titan, Zirkonium, Hafnium, Thorium, Germanium, Zinn, Blei, Vanadium, Niob, Tantal, Chrom, Molybdän, Wolfram, Rhenium, Eisen, Kobalt, Nickel, Kupfer, Zink und Wismut gebildet wird.

11. Verfahren zur Herstellung der Zusammensetzung nach Anspruch 1, dadurch gekennzeichnet, daß man die Mischung der Aluminiumoxid-Charge und des Aluminiumoxid-Bindemittels in Pulverform herstellt anschließend die Mischung der Pulver mit Wasser oder mit angesäuertem Wasser in Kontakt bringt, wobei die Mischung Charge-Bindemittel-Wasser derart hergestellt wird, daß der pH der Endzusammensetzung unter 4 liegt und die Verhältnisse so gewählt werden, daß der Dispersionsgrad der Endzusammensetzung zwischen 10 und 60 % liegt und daß man die Viskosität der Zusammensetzung auf einen Wert zwischen 10 und 100 Centipoise einstellt, indem man die Gesamtkonzentration an Aluminiumoxid auf zwischen 10 und 40 Gew.% einstellt oder der Zusammensetzung organische Verdickungsmittel zusetzt.

12. Verfahren zur Herstellung der Zusammensetzung nach Anspruch 1, dadurch gekennzeichnet, daß man unter Rührung die Aluminiumoxid-Charge in Pulverform mit dem Aluminiumoxid-Bindemittel in Form einer Suspension oder Dispersion in solchen Verhältnissen mischt, daß der Dispersionsgrad der erhaltenen Zusammensetzung zwischen 10 und 60 % und der pH unter 4 liegt und daß man die Viskosität der Zusammensetzung auf einen Wert zwischen 10 und 100 Centipoise einstellt, indem man die Gesamtkonzentration an Aluminiumoxid in der Zusammensetzung auf zwischen 10 und 40 Gew.% einstellt oder der Zusammensetzung organische Verdickungsmittel zusetzt.

13. Verfahren zum Beschichten eines aus einem keramischen oder metallischen Substrat bestehenden Katalysatorträgers mit einer Zusammensetzung nach Anspruch 1, dadurch gekennzeichnet, daß man das keramische oder metallische Substrat in die Zusammensetzung eintaucht in der Weise, daß alle Kanäle des Substrats gefüllt werden ; man kann ebenfalls so arbeiten, daß man die Zusammensetzung durch die Kanäle des Substrats laufen läßt ; man läßt teilweise abtropfen und unterwirft dann die Kanäle des Substrats einer Drainage, z. B. mittels eines Pressluftstroms ; man koaguliert die Zusammensetzung durch thermische oder chemische Einwirkung ; man trocknet erforderlichenfalls bei einer Temperatur unter 300 °C, dann calciniert man das mit der Zusammensetzung beschichtete Substrat bei einer Temperatur zwischen 300 und 1 100 °C.

14. Katalysatorträger, erhalten durch Beschichtung eines metallischen oder keramischen Substrats mit der erfindungsgemäßen Zusammensetzung, dadurch gekennzeichnet, daß die Beschichtung gleichzeitig mikro- und makroporös ist und daß die Porenverteilung der Beschichtung so ist, daß 0,05 bis 0,50 cm³/g des Porenvolumens durch Poren mit einem Durchmesser zwischen 0,1 und 0,5 μm, 0 bis 0,40 cm³/g des Porenvolumens durch Poren mit einem Durchmesser zwischen 0,5 und 1 μm, 0 bis 0,40 cm³/g des Porenvolumens durch Poren mit einem Durchmesser zwischen 1 und 20 μm und 0,3 bis 0,9 cm³/g des Porenvolumens durch Poren mit einem Durchmesser unter 0,1 μm gebildet werden ; die spezifische Oberfläche der Beschichtung liegt zwischen 20 und 350 m²/g ; das Gesamtporenvolumen der Beschichtung liegt zwischen 0,35 cm³/g und 2,2 cm³/g, vorzugsweise zwischen 0,5 und 1,5 cm³/g.

15. Anwendung der Katalysatorträger nach Anspruch 14 für die Herstellung von Katalysatoren, die bei sehr schnellen Reaktionen mit starker Begrenzung der internen Diffusion verwendbar sind, und bei Reaktionen mit fortschreitender Vergiftung wie der Behandlung von Abgas aus Verbrennungsmotoren und den Wasserstoffbehandlungen von Erdölprodukten, wie Hydrodesulfurierung und Hydrodemetallisierung.

16. Anwendung von Katalysatorträgern nach Anspruch 15 bei der Behandlung von Abgasen aus Verbrennungsmotoren, bei der Hydrodesulfurierung, der Hydrodemetallisierung, der Hydrodenitrifizierung, der Schwefelgewinnuing aus Schwefelverbindungen, der Dehydratisierung, dem Reformieren, dem Dampfreformieren, der Dehydrohalogenierung, dem Hydrocracken, der Hydrierung, der Dehydrierung, der Dehydrocyclisierung von Kohlenwasserstoffen oder anderen organischen Verbindungen, und bei Oxydations- und Reduktionsreaktionen.